# EUROPEAN PATENT APPLICATION

(11) **EP 4 712 220 A2**
(43) Date of publication of application: **18.03.2026**
(21) Application number: 25177836.1
(22) Date of filing: 21.05.2025
(51) Int. Cl.: H01M 50/105, H01M 10/04, H01M 10/0585, H01M 50/178, H01M 50/186, H01M 50/595

(54) **POUCH-TYPE SECONDARY BATTERIES, PRESS DEVICES THEREOF, AND MANUFACTURING METHODS THEREOF**

(30) Priority: 20.08.2024 KR 20240111411
(71) Applicant: SAMSUNG SDI CO., LTD., Yongin-si, Gyeonggi-do 17084 (KR)
(72) Inventor: LIM, Byung-Ho, 17084 Yongin-si, Gyeonggi-do (KR)
(74) Representative: Gulde & Partner

(57) **Abstract**

Aspects of embodiments of the present disclosure relate to pouch-type secondary batteries (100), press devices (150) for secondary batteries (100), and manufacturing methods (180) of secondary batteries (100). A pouch-type secondary battery (100) includes: an electrode assembly (110) including a stack of unit cells (112) including: a first electrode plate (114); a first electrode tab (116) on the first electrode plate (114); a second electrode plate (120); a second electrode tab (122) on the second electrode plate (120); and a separator (118) between the first electrode plate (114) and the second electrode plate (120); and a first tape (130, 132) attached to a front side of the electrode assembly (110) perpendicular to a stacking direction of the stack of unit cells (112). The first tape (130, 132) is located at a corner portion (138) of the electrode assembly (110) where the first electrode tab (116) or the second electrode tab (122) is located, and the corner portion (138) is located at an inclined area (128, A, A') where a thickness of the electrode assembly (110) decreases.

## Description

### BACKGROUND

### 1. Field

Aspects of embodiments of the present disclosure relate to pouch-type secondary batteries, press devices for secondary batteries, and manufacturing methods of secondary batteries.

### 2. Description of the Related Art

Unlike primary batteries that are not designed to be (re)charged, secondary (or rechargeable) batteries are batteries that are designed to be discharged and recharged. Low- capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary battery manufacturing processes may be broadly divided into an electrode process, an assembly process, an activation process, and a pack process. The activation process or formation process is a process of imparting electrical characteristics to secondary batteries manufactured through the assembly process, and for performing defect inspection or the like after a stabilization work. Immediately after the assembly process, the secondary battery may be charged to provide electrical characteristics, and an aging process may be repeated sufficiently to ensure that the positive and negative electrode materials are sufficiently impregnated with an electrolyte. Pouch-type secondary batteries may undergo a degassing process for removing internal gases when necessary or desired before achieving a desired battery performance. A final cell is completed by examining an internal resistance (IR) and an open circuit voltage (OCV).

The above information disclosed in this Background section is for enhancement of understanding of the background of the present disclosure, and therefore, it may contain information that does not constitute related (or prior) art.

### SUMMARY

The process of activating secondary batteries by heating, pressing, and charging during the formation process is referred to as a heat press charge (HPC) process. However, pouch-type secondary batteries may have problems in that side reactions may occur at an end portion where electrode tabs are connected during the charging and discharging process in the HPC process, or during the life of the secondary battery.

One or more embodiments of the present disclosure may be directed to pouch-type secondary batteries, press devices for secondary batteries, and manufacturing methods of secondary batteries.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a pouch-type secondary battery includes: an electrode assembly including a stack of unit cells (e.g., formed by stacking) including: a first electrode plate; a first electrode tab on the first electrode plate; a second electrode plate; a second electrode tab on the second electrode plate; and a separator between the first electrode plate and the second electrode plate; and a first tape attached to a front side of the electrode assembly perpendicular to a stacking direction of the stack of unit cells. The first tape is located at a corner portion of the electrode assembly where the first electrode tab or the second electrode tab is located, and the corner portion is located at an inclined area where a thickness of the electrode assembly decreases.

In an embodiment, the inclined area may be (or may correspond to an area) where a thickness of a first electrode mixture portion of the first electrode plate or a second electrode mixture portion of the second electrode plate is reduced.

In an embodiment, the thickness of the first electrode mixture portion of the first electrode plate or the second electrode mixture portion of the second electrode plate in (or belonging to) the inclined area may be less than that of an area other than the inclined area.

In an embodiment, the first tape may be attached to the front side of the electrode assembly (e.g., perpendicular to the stacking direction) and may be attached to a back side opposite to the front side.

In an embodiment, the first electrode tab may include a stack of a first electrode tab group, a first lead tab may be connected to the first electrode tab group, the second electrode tab may include a stack of a second electrode tab group, and a second lead tab may be connected to the second electrode tab group. The first lead tab and the second lead tab may be located in a same direction of the electrode assembly as each other.

In an embodiment, the first electrode tab may include a stack of a first electrode tab group, a first lead tab may be connected to the first electrode tab group, the second electrode tab may include a stack of a second electrode tab group, and a second lead tab may be connected to the second electrode tab group. The first lead tab and the second lead tab may be located in opposite directions of the electrode assembly from each other.

In an embodiment, the first tape may include an insulating material.

According to one or more embodiments of the present disclosure, a press device of a pouch-type secondary battery, includes: a first plate, and a second plate opposite to the first plate; an inserted paper having (or configured to have) opposite ends connected to an upper portion of the first plate and an upper portion of the second plate, respectively, and interposed between the first plate and the second plate; and a second tape attached to the inserted paper. The second tape is attached (e.g., to a position corresponding) to a corner portion of the pouch-type secondary battery seated on the inserted paper, the corner portion being where a lead tab of the pouch-type secondary battery is located, and the corner portion is located in an inclined area where a thickness of an electrode assembly decreases.

In an embodiment, the pouch-type secondary battery may include: an electrode assembly including a stack of unit cells (e.g., formed by stacking) including: a first electrode plate; a first electrode tab on the first electrode plate; a second electrode plate; a second electrode tab on the second electrode plate; and a separator between the first electrode plate and the second electrode plate; and a first tape attached to a front side of the electrode assembly perpendicular to a stacking direction of the stack of unit cells. The first tape may be located at the corner portion of the electrode assembly where the first electrode tab or the second electrode tab is located.

In an embodiment, the second tape may cover an entire area of the first tape.

In an embodiment, an end of the second tape may be located on an upper side of the first tape.

In an embodiment, the lead tab may be exposed outside of the inserted paper on which the pouch-type secondary battery is seated.

In an embodiment, the lead tab may be exposed in a lateral direction of the inserted paper.

In an embodiment, the lead tab may be exposed in an upward direction of the inserted paper.

In an embodiment, the inclined area may be (or may correspond to an area) where a thickness of a first electrode mixture portion of the first electrode plate or a second electrode mixture portion of the second electrode plate is reduced.

In an embodiment, the thickness of the first electrode mixture portion of the first electrode plate or the second electrode mixture portion of the second electrode plate in (or belonging to) the inclined area may be less than that of an area other than the inclined area.

In an embodiment, the first tape and the second tape may include a pressure-resistant material or a heat-resistant material.

According to one or more embodiments of the present disclosure, a method for manufacturing a pouch-type secondary battery, includes: manufacturing an electrode assembly by stacking unit cells including: a first electrode plate; a first electrode tab on the first electrode plate; a second electrode plate; a second electrode tab on the second electrode plate; and a separator between the first electrode plate and the second electrode plate; attaching a first tape to a front side of the electrode assembly perpendicular to a stacking direction of the unit cells; assembling the pouch-type secondary battery including the electrode assembly and the first tape; and pressing the pouch-type secondary battery by using a press device. The press device includes: a first plate, and a second plate opposite to the first plate; an inserted paper having opposite ends connected to an upper portion of the first plate and an upper portion of the second plate, respectively, and interposed between the first plate and the second plate; and a second tape attached to the inserted paper. The first tape is located at a corner portion of the electrode assembly where the first electrode tab or the second electrode tab is located, the corner portion is located in an inclined area where a thickness of the electrode assembly decreases, and the second tape is attached to a position corresponding to the first tape.

In an embodiment, the second tape may cover an entire area of the first tape.

In an embodiment, an end of the second tape may be on an upper side of the first tape.

According to some embodiments of the present disclosure, flatness of an inclined portion of an end portion where the electrode tabs are connected may be improved through a tape attached to the electrode assembly of a pouch-type secondary battery, thereby suppressing side reactions due to an accumulation of an electrolyte during the charging and discharging process, or during the life of the secondary battery.

According to some embodiments of the present disclosure, flatness of an inclined portion of an end portion where the electrode tabs are connected may be improved through an improvement in a structure of a press device in the HPC process, thereby suppressing side reactions due to an accumulation of an electrolyte during the charging and discharging process, or during the life of the secondary battery.

According to some embodiments of the present disclosure, a process of attaching the tape (e.g., only the process of attaching the tape) may be further included in an existing manufacturing process of a pouch-type secondary battery, so that the manufacturing process may be easily improved.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing a pouch-type secondary battery according to an embodiment of the present disclosure;
FIG. 2 illustrates a longitudinal cross-sectional view showing a portion of an electrode assembly according to an embodiment of the present disclosure;
FIG. 3 illustrates a side reaction occurrence process of a pouch-type secondary battery according to an embodiment of the present disclosure;
FIG. 4 illustrates an electrode assembly according to an embodiment of the present disclosure;
FIG. 5 illustrates an electrode assembly according to an embodiment of the present disclosure;
FIG. 6 illustrates a perspective view showing a press device according to an embodiment of the present disclosure;
FIG. 7 illustrates a perspective view showing a press device according to an embodiment of the present disclosure;
FIG. 8 illustrates a positional relationship between a first tape and a second tape according to an embodiment of the present disclosure;
FIG. 9 illustrates a positional relationship between a first tape and a second tape according to an embodiment of the present disclosure;
FIG. 10 illustrates a longitudinal cross-sectional view of a press device according to an embodiment of the present disclosure; and
FIG. 11 illustrates a flowchart showing a method of manufacturing a pouch-type secondary battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure as defined by the appended claims. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the related requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

In the present disclosure, the sizes and relative sizes of layers and regions shown in the drawings may be exaggerated for clarity of illustration. In other words, the sizes shown in the drawings are provided for convenience of illustration, and thus, the present disclosure is not limited thereto. In addition, the same reference numerals denote the same elements throughout the present specification.

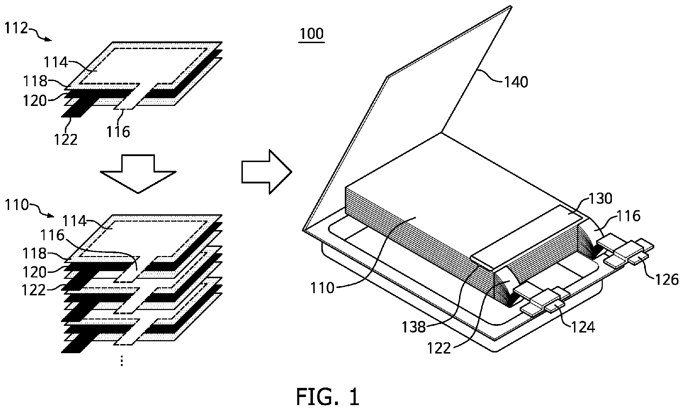

FIG. 1 illustrates a perspective view showing a pouch-type secondary battery according to an embodiment of the present disclosure. A pouch-type secondary battery 100 may include an electrode assembly 110, and a case 140 that accommodates the electrode assembly 110. The case 140 may be in the form of a pouch. In other words, the case 140 may have a pouch shape.

Referring to FIG. 1, the electrode assembly 110 may include a first electrode plate 114 that may be a positive electrode plate, a second electrode plate 120 that may be a negative electrode plate, and a separator 118 therebetween. As another example, the first electrode plate 114 may be the negative electrode plate and the second electrode plate 120 may be the positive electrode plate. Hereinafter, for convenience of illustration, the first electrode plate 114 may be described in more detail in the context of the positive electrode plate and the second electrode plate 120 may be described in more detail in the context of the negative electrode plate, but the present disclosure is not limited thereto.

The first electrode plate 114 may include a first electrode tab 116 electrically connected to a first electrode uncoated portion. The second electrode plate 120 may include a second electrode tab 122 electrically connected to a second electrode uncoated portion. The first electrode tab 116 and the second electrode tab 122 may be welded to a first lead tab 126 and a second lead tab 124, respectively, and thus, may be electrically connected to the outside. A tab film for insulation from the case 140 may be attached to the first lead tab 126 and the second lead tab 124.

The case 140 may be sealed by bringing sealing portions at the edges into contact with each other while the electrode assembly 110 is accommodated therein. The sealing may be performed with the tab film between the sealing portions. As illustrated in FIG. 1, the tab film may be attached to each of the first electrode tab 116 and the second electrode tab 122.

The sealing portion of the case 140 may be formed of a heat-melting material, and may have a suitable structure in which the sealing is achieved by bonding heat-melting layers to each other. Because a heat-melting material may generally have a weak adhesion to a metal, the tab film in the form of a thin film may be attached to the electrode tab, and may be fused with the case 140.

Referring to FIG. 1, the electrode assembly 110 may be formed by stacking unit cells 112 on one another. The unit cell 112 may include the first electrode plate 114 having the first electrode tab 116 formed thereon, the second electrode plate 120 having the second electrode tab 122 formed thereon, and the separator 118 between the first electrode plate 114 and the second electrode plate 120. Thus, in an embodiment, the electrode assembly 110 may be a stack type assembly. The electrode plate and the electrode tab may be formed in a thin plate shape or a film shape. The electrode assembly 110 may correspond to a Z-stack electrode assembly, in which the first electrode plate 114 and the second electrode plate 120 are inserted on opposite sides of the separator 118 folded in a Z-stack. However, the shape of the electrode assembly is not particularly limited thereto, and in other embodiments, the electrode assembly may have any suitable shape as needed or desired.

A plurality of electrode assemblies 110 may be stacked, so that long sides thereof are adjacent to each other, and may be stored separately inside the case 140. The number of electrode assemblies is not particularly limited in the present disclosure.

The first electrode tab 116 and the second electrode tab 122 may be positioned on the same side of the electrode assembly 110 as each other. For example, the first electrode tab 116 and the second electrode tab 122 may be formed on the same side of the electrode assembly 110 as each other that is parallel to or substantially parallel to the stacking direction of the unit cells 112 of the electrode assembly 110. In other words, the first electrode tab 116 and the second electrode tab 122 may extend in a direction perpendicular to or substantially perpendicular to the stacking direction of the unit cells 112 from the same side of the electrode assembly as each other. In some embodiments, the first electrode tab 116 and the second electrode tab 122 may be positioned on different sides from each other. For example, the first electrode tab 116 may be positioned on the left side of the electrode assembly 110 among the sides parallel to or substantially parallel to the stacking direction of the unit cells 112 of the electrode assembly 110, and the second electrode tab 122 may be positioned on the right side of the electrode assembly 110. The left side and the right side are described for convenience of illustration based on the secondary battery illustrated in FIG. 1, but the positions thereof may be variously modified as needed or desired, such as in a case where the secondary battery rotates left and right or up and down.

The electrode assembly 110 may be accommodated in the case 140 together with an electrolyte. In addition, in the electrode assembly 110, the first lead tab and the second lead tab may be connected to the first electrode tab 116 of the first electrode plate 114 and the second electrode tab 122 of the second electrode plate 120, respectively. A first current collector and a second current collector may be welded and connected to the first lead tab and the second lead tab, respectively.

According to an embodiment of the present disclosure, a first tape 130 may be attached to a front side of the electrode assembly 110 perpendicular to or substantially perpendicular to the stacking direction of the unit cells 112 of the electrode assembly 110 as described above. In other words, the front side of the electrode assembly 110 may be a side that extends in a direction perpendicular to or substantially perpendicular to the stacking direction of the unit cells 112 of the electrode assembly 110. For example, on the front side of the electrode assembly 110 perpendicular to or substantially perpendicular to the stacking direction of the unit cells 112 of the electrode assembly 110, the first tape 130 may be attached to a corner portion 138 of the electrode assembly 110 in the direction where the first electrode tab 116 or the second electrode tab 122 is positioned. In some embodiments, on the back side of the electrode assembly 110 perpendicular to or substantially perpendicular to the stacking direction of the unit cells 112 of the electrode assembly 110, the first tape 130 may be attached to a corner portion 138 of the electrode assembly 110 in the direction where the first electrode tab 116 or the second electrode tab 122 is positioned. The front or back side of the electrode assembly 110 distinguish two sides of the electrode assembly 110 that are (e.g., that extend in a direction) perpendicular to or substantially perpendicular to the stacking direction of the unit cells 112 of the electrode assembly 110, and does not necessarily refer to the surface facing the front or back side. The front or back side of the electrode assembly 110 may be referred to as a first side or a second side of the electrode assembly 110 that is perpendicular to or substantially perpendicular to the stacking direction.

The length of the first tape 130 may correspond to a width of the electrode assembly 110. The first tape 130 will be described in more detail below.

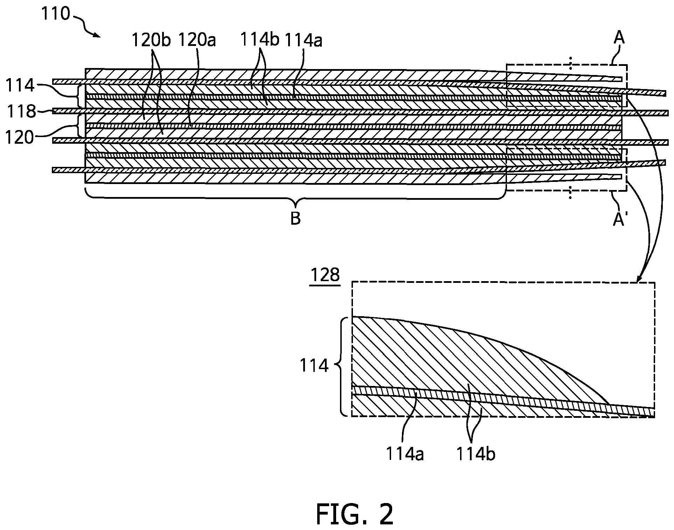

FIG. 2 illustrates a longitudinal cross-sectional view showing a portion of an electrode assembly according to an embodiment of the present disclosure. FIG. 2 illustrates an example of a structure in which unit cells are stacked, and shows positions of inclined regions A and A' and a normal region B.

The first electrode plate 114 may include a first electrode current collector plate 114a formed of a metal foil, such as aluminum or an aluminum alloy, a first electrode mixture portion 114b formed thereon, and a first uncoated portion, which is an area where the first electrode mixture portion 114b is not applied. The first electrode tab 116 may be formed integrally with the first uncoated portion, or may be connected to the first uncoated portion by welding or the like. The first electrode tab 116 may serve as a path for a current flow between the first electrode plate 114 and the current collector. In some examples, the first electrode tab 116 may be formed by cutting the first electrode plate 114 to protrude toward one side in advance when manufacturing the first electrode plate 114, and may further protrude toward the one side than the separator 118 without a separate cutting.

The second electrode plate 120 may be formed by applying a second electrode mixture portion 120b, such as graphite or carbon, to a second electrode current collector plate 120a formed of a metal foil, such as copper, a copper alloy, nickel, or a nickel alloy, and may include a second uncoated portion that is an area where the second electrode mixture portion 120b is not applied. The second electrode tab 122 may be formed integrally with the second uncoated portion, or may be connected to the second uncoated portion by welding or the like. The second electrode tab 122 may serve as a path for a current flow between the second electrode plate 120 and the current collector. In some examples, the second electrode tab 122 may be formed by cutting the second electrode plate 120 to protrude toward one side in advance when manufacturing the second electrode plate 120, and may further protrude toward the one side than the separator 118 without a separate cutting.

The first electrode plate 114 and the second electrode plate 120 are shown as having the same or substantially the same size as each other in FIG. 2, but the present disclosure is not limited thereto, and the two electrode plates may have different sizes from each other. Because the sizes of the two electrode plates may be different from each other, an overhang may occur. For example, the area of the negative electrode plate may be larger than the area of the positive electrode plate.

FIG. 2 schematically illustrates an example of a stacked structure of a stack-type electrode assembly 110 according to an embodiment, but the present disclosure is not limited to the number, the size, or the structure of the electrode plates. For example, a first electrode mixture portion 114b may be applied to opposite sides, or to one side of a first electrode current collector plate 114a. In addition, a second electrode mixture portion 120b may be applied to opposite sides, or to one side of a second electrode current collector plate 120a. The outermost portion of the electrode assembly 110 may be finished with the first electrode current collector plate 114a or the second electrode current collector plate 120a.

In a case where an electrode active material is applied to an electrode current collector, the end of the electrode active material may be applied in an inclined shape, compared to other portions thereof, due to a surface tension of the electrode active material during a process of applying a slurry-state electrode active material. Accordingly, the end of the electrode mixture portions 114b and 120b may have an inclined shape. Due to the inclined shape of the electrode mixture portions 114b and 120b, the electrode plates 114 and 120 including the electrode mixture portions may form inclined areas A and A' at the end of the electrode assembly 110. For example, the end of the electrode assembly 110 may be an area including a boundary area between the first uncoated portion and the first electrode mixture portion 114b, or a boundary area between the second uncoated portion and the second electrode mixture portion 120b. The end of the electrode assembly 110 may be an area where the boundary area between the uncoated portion and the mixture portion is connected to the first electrode tab 116 or the second electrode tab 122.

Referring to FIG. 2, the first electrode mixture portion 114b of the first electrode plate 114 or the second electrode mixture portion 120b of the second electrode plate 120 in (e.g., belonging to) the inclined areas A and A' may have a reduced thickness compared to that of the normal area B, which is an area other than the inclined areas A and A'. The inclined areas A and A' may correspond to an area where the thickness of the electrode assembly is reduced.

In an embodiment, in the electrode assembly 110 including the inclined areas A and A' as described above, the thickness of the electrode assembly 110 at the portion where the first electrode tab 116 or the second electrode tab 122 is positioned may be thinner than that in the normal area B.

In addition, in a stacking method for stacking the unit cells 112 including the first electrode plate 114, the separator 118, and the second electrode plate 120, for example, a time (e.g., a certain or predetermined time) may be used in the stacking of the first electrode plate 114 and the separator 118, or in the stacking of the separator 118 and the second electrode plate 120. During the time, the separator 118 may be lifted. A pore space between the electrode plates 114 and 120 and the separator 118 may become wider due to the lifting of the separator 118.

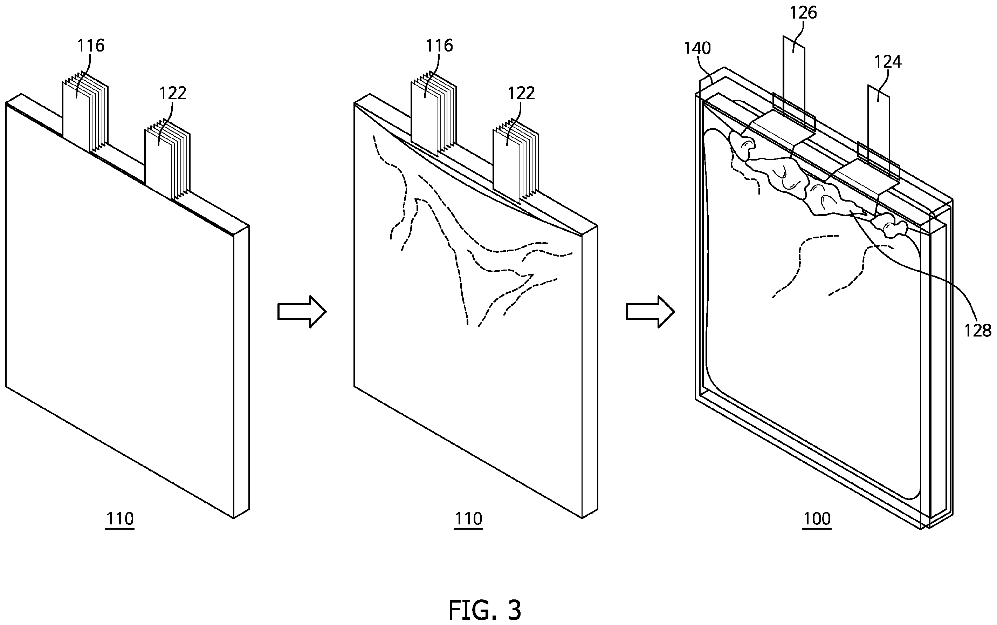

FIG. 3 illustrates a side reaction occurrence process of a pouch-type secondary battery according to an embodiment of the present disclosure. FIG. 3 is a diagram illustrating a process of manufacturing the electrode assembly 110 by stacking the unit cells, and manufacturing the pouch-type secondary battery 100 after being accommodated in the case 140.

In a case where the case 140 accommodating the electrode assembly 110 is sealed and the electrolyte is injected, the pore space between the separator and the electrode plate may be filled with the electrolyte. However, as described above, the electrolyte may accumulate at the end of the electrode assembly where the first electrode tab 116 or the second electrode tab 122 of the electrode assembly 110 is positioned. In more detail, as the electrolyte fills a relatively wider pore space positioned in the inclined area 128, a stagnation phenomenon may occur. As a result, an undesirable side reaction may occur on the surface of the electrode plate during the charging and discharging process of the pouch-type secondary battery 100.

Accordingly, in order to suppress the side reaction that may occur at the end of the electrode assembly where the first electrode tab 116 or the second electrode tab 122 is positioned, a flatness of the corner portion of the electrode assembly 110 where the first electrode tab 116 or the second electrode tab 122 is positioned to correspond to the inclined area 128 (e.g., the corner portion 138 described above with reference to FIG. 1) may be increased. According to an embodiment of the present disclosure, in order to improve the flatness of the corner portion of the electrode assembly 110, a first tape (e.g., the first tape 130 described above with reference to FIG. 1) may be attached. The inclined area 128 where the side reaction may occur may be formed across an entire width of the electrode assembly 110, as illustrated in FIG. 3. Therefore, the length of the first tape may correspond to the width of the electrode assembly 110.

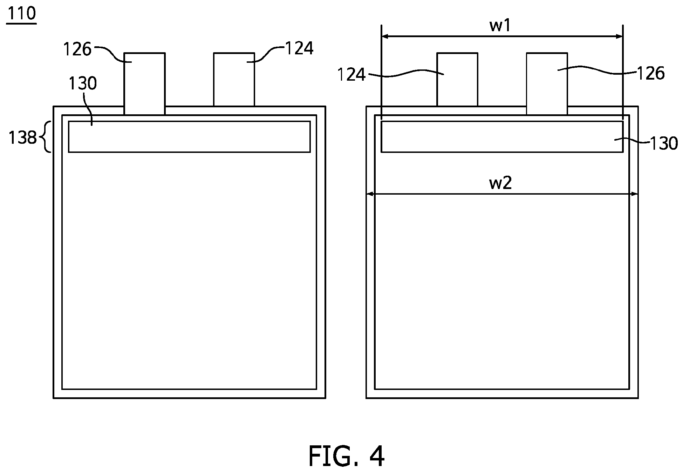

FIG. 4 illustrates the electrode assembly according to an embodiment of the present disclosure. FIG. 4 illustrates a front view and a back view of the electrode assembly 110 according to an embodiment. Hereinafter, redundant description as those above may not be repeated.

The first tape 130 attached to the corner portion 138 of the electrode assembly 110 may include an insulating material. For example, the first tape 130 may include at least one of polyimides (PI), polyethylene (PE), or polystyrene (PS). In addition, the first tape 130 may have an adhesive strength to be bonded to the front side of the electrode assembly 110.

Referring to FIG. 4, in order to improve the flatness of the corner portion 138, the first tape 130 may be positioned in the inclined area where the thickness of the electrode assembly 110 decreases. The width w1 of the first tape 130 may correspond to the width w2 of the electrode assembly 110. For example, the width w1 of the first tape 130 may be less than or equal to the width w2 of the electrode assembly 110. The width w2 of the electrode assembly 110 may refer to the length between the corners of the side where the electrode tabs are joined in a case where the electrode assembly is viewed from above (e.g., in a plan view).

For example, the width w1 of the first tape 130 may be greater than the width of the electrode tab. In some embodiments, the width w1 of the first tape 130 may correspond to the width that covers both electrode tabs. In some embodiments, the width w1 of the first tape 130 may correspond to the width that covers all the mixture portions of the electrode assembly 110. In some embodiments, the width w1 of the first tape 130 may correspond to the width that covers all the areas with a boundary.

According to an embodiment, the first tape 130 may be attached to the front side of the electrode assembly 110 perpendicular to or substantially perpendicular to the stacking direction of the unit cells, and to the back side opposite the front side. In more detail, as illustrated in FIG. 4, the first tape 130 may be symmetrically or substantially symmetrically attached to the front and/or back sides of the electrode assembly 110 at a position corresponding to the corner portion 138. In a case where the first tape 130 is attached to the front and back sides, an improvement of the flatness of the corner portion 138 may be increased.

According to an embodiment, in the pouch-type secondary battery including the electrode assembly 110 to which the first tape 130 is attached, the first lead tab 126 connected to a first electrode tab group in which the first electrode tabs are stacked, and the second lead tab 124 connected to a second electrode tab group in which the second electrode tabs are stacked, may be positioned in the same direction of the electrode assembly 110 as each other.

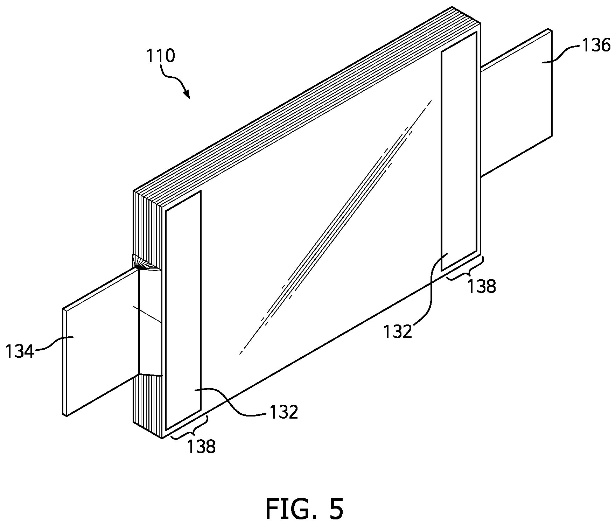

FIG. 5 illustrates an electrode assembly according to an embodiment of the present disclosure.

According to an embodiment, in a pouch-type secondary battery including an electrode assembly 110 to which a first tape 130 is attached, a first lead tab 134 connected to a first electrode tab group in which first electrode tabs are stacked, and a second lead tab 136 connected to a second electrode tab group in which second electrode tabs are stacked, may be positioned in opposite directions of the electrode assembly 110 from each other.

According to an embodiment, in order to improve the flatness of an inclined area (e.g., the inclined area 128 of FIG. 2) in the electrode assembly 110, a first tape 132 may be attached to a corresponding corner portion 138. The corner portion 138 may be positioned in an inclined area where the thickness of the electrode assembly decreases. Referring to FIG. 5, in a case where the first lead tab 134 and the second lead tab 136 are positioned in opposite directions of the electrode assembly 110 from each other, corner portions 138 may be present for the first lead tab 134 and the second lead tab 136, respectively. Accordingly, a plurality of first tapes 130 may be attached to a plurality of corner portions 138 positioned on the front side of the electrode assembly 110 and/or a plurality of corner portions 138 positioned on the back side of the electrode assembly 110, respectively. In some embodiments, in a case where the first tape (e.g., a plurality of first tapes) 130 is/are symmetrically or substantially symmetrically attached to the front and back sides, an improvement in the flatness of the inclined area may be increased.

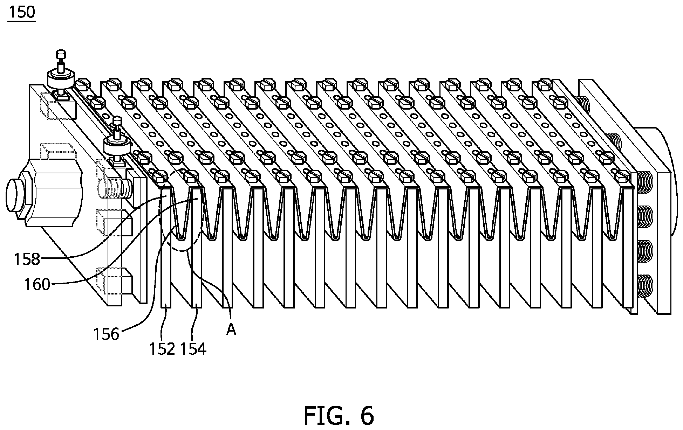

FIG. 6 illustrates a perspective view showing a press device according to an embodiment of the present disclosure. FIG. 6 illustrates a part of the press device used in a secondary battery formation process.

The press device according to some embodiments of the present disclosure may be any suitable kind of device that presses a pouch-type secondary battery from opposite sides thereof. For example, the press device may include (e.g., may be) a heat press charge (HPC) device. Referring to FIG. 6, the press device 150 may include a first plate 152, a second plate 154 facing the first plate 152, and an inserted paper 156 having opposite ends connected to an upper portion 158 of the first plate 152 and an upper portion 160 of the second plate 154, respectively, and interposed between the first plate 152 and the second plate 154. The press device may have different models, sizes, and forms during the HPC process, and the present disclosure is not limited thereto.

Referring to FIG. 6, the press device 150 according to an embodiment may include a plurality of plates 152 and 154 and a plurality of guides formed by an inserted paper 156. A pouch-type secondary battery may be seated on one side of the inserted paper 156. The press device 150 may have any suitable number, shape, and/or size of the plate and the inserted paper.

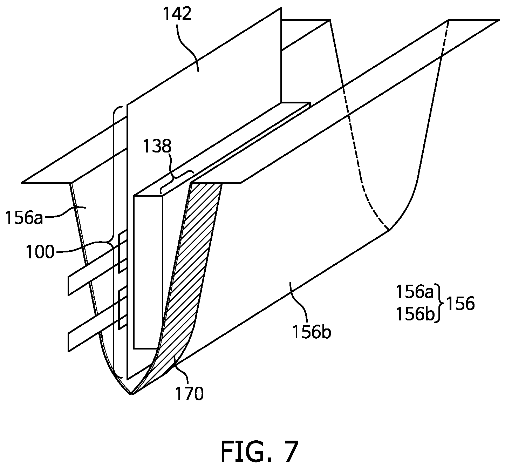

FIG. 7 illustrates a perspective view showing a press device according to an embodiment of the present disclosure. FIG. 7 illustrates an inserted paper 156 in a press device according to an embodiment of the present disclosure. FIG. 7 illustrates an enlarged perspective view of the inserted paper 156 of the area A of FIG. 6.

A second tape 170 may be attached to the inserted paper 156 of the press device of the pouch-type secondary battery according to an embodiment of the present disclosure. In more detail, the second tape 170 may be attached to a position corresponding to the corner portion 138 of the pouch-type secondary battery 100 where the lead tab (e.g., the lead tabs 124 and 126 of FIG. 1) of the pouch-type secondary battery 100 seated on the inserted paper 156 is positioned. In a case where the pouch-type secondary battery 100 that is seated in this manner is pressed, an improvement in the flatness of the corner portion 138 may be increased.

Referring to FIG. 7, the inserted paper 156 may have one side 156a on which the pouch-type secondary battery 100 is seated, and another side 156b opposite to the one side 156a. In order to increase the flatness of the corner portion 138, the second tape 170 may be attached to at least one of the one side 156a of the inserted paper 156 or the other side 156b opposite to the one side 156a.

In an embodiment, the pouch-type secondary battery 100 may be seated on the one side 156a of the inserted paper 156 of the press device, so that the lead tab is exposed to the outside of the inserted paper 156. In more detail, as illustrated in FIG. 7, the lead tab may be exposed in the lateral direction of the inserted paper 156. As such, pressurization of the lead tab and terminal portion may be prevented or substantially prevented.

For example, the first lead tab (e.g., the first lead tab 126 of FIG. 4) and the second lead tab (e.g., the second lead tab 124) of the pouch-type secondary battery 100 may be positioned in the same direction as each other. In this case, as illustrated in FIG. 7, the second tape 170 may be attached to a position corresponding to the corner portion 138 of the pouch-type secondary battery 100 and/or the first tape (e.g., the first tape 130 of FIG. 4). For example, one second tape 170 may be attached to one side 156a or the other side 156b of the inserted paper 156. The corner portion 138 may be positioned in an inclined area where the thickness of the electrode assembly decreases.

For example, the first lead tab (e.g., the first lead tab 134 of FIG. 5) and the second lead tab (e.g., the second lead tab 136) of the pouch-type secondary battery 100 may be positioned in opposite directions of the electrode assembly from each other. In this case, the size of the inserted paper 156 may be adjusted, so that the first lead tab and the second lead tab are exposed to the outside of the inserted paper 156. In this case, the second tape may be attached to a position corresponding to the corner portion 138 of the pouch-type secondary battery 100 and/or the first tape (e.g., the first tape 132 of FIG. 5). For example, two second tapes 170 may be attached to one side 156a or the other side 156b of the inserted paper 156. The corner portion 138 may be positioned in an inclined area where the thickness of the electrode assembly decreases.

In an embodiment, as illustrated in FIG. 7, the pouch-type secondary battery 100 seated on the press device may include an air pocket 142. Gas may be generated due to chemical reactions inside the secondary battery during charging/discharging and aging processes. In cylindrical and prismatic secondary batteries, a case is solid and has a sufficient space inside to retain the gas, but in the pouch-type secondary battery 100, a flexible case may be applied, which may cause swelling. Therefore, an additional process of containing and removing gas may be performed, the air pocket 142 may be included for the additional process. The air pocket 142 may be exposed to the outside of the plate.

In an embodiment, the second tape 170 may be attached together with the first tape (e.g., the first tape 130 of FIG. 4) as described above. For example, the second tape 170 may be attached to the inserted paper 156 of the press device to correspond to the inclined area (e.g., the inclined areas A, A', and 128 of FIG. 2), in which the thickness of the first electrode mixture portion of the first electrode plate or the second electrode mixture portion of the second electrode plate of the pouch-type secondary battery 100 decreases. Accordingly, the flatness of the inclined area may be improved, and suppressing the side reactions due to the electrolyte may be increased.

In an embodiment, the thickness of the first electrode mixture portion of the first electrode plate or the second electrode mixture portion of the second electrode plate in (e.g., belonging to) the inclined area may be reduced, compared to that of the normal area (e.g., the normal area B of FIG. 2) other than the inclined area. The second tape 170 may be attached to the inserted paper 156 of the press device to correspond to the inclined area.

In an embodiment, the first tape attached to the electrode assembly and the second tape 170 attached to the inserted paper of the press device may include a pressure-resistant or heat-resistant material. For example, the press device may include (e.g., may be) an HPC device that may heat and press the pouch-type secondary battery 100 seated on one side 156a of the inserted paper. Therefore, the first tape and the second tape 170 that are heated and pressed together may be formed of a suitable material that may withstand a high temperature and a high pressure. For example, the material may be an insulating material that is not deformed by the high pressure at the temperature and the pressure of the formation process of the pouch-type secondary battery.

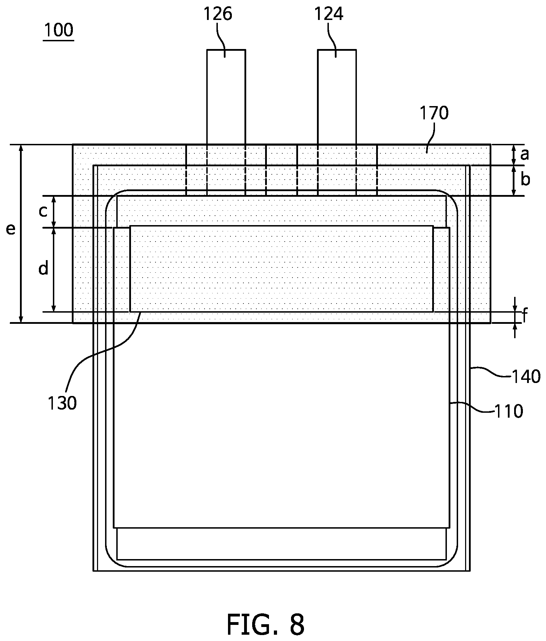

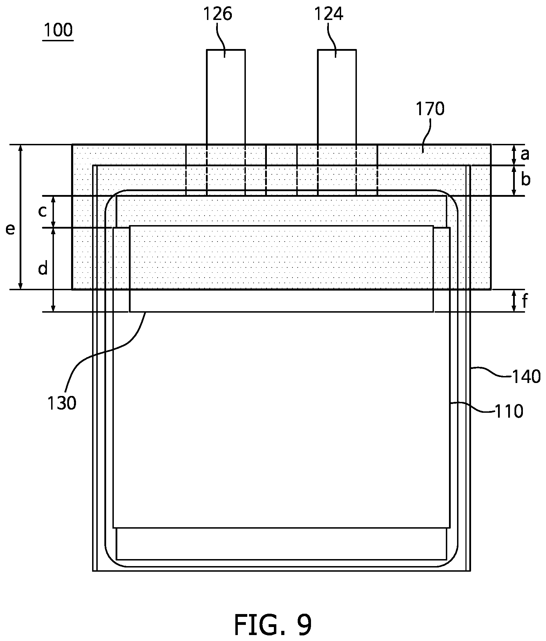

FIG. 8 illustrates a positional relationship between the first tape and the second tape according to an embodiment of the present disclosure. FIG. 9 illustrates a positional relationship between the first tape and the second tape according to an embodiment of the present disclosure.

FIGS. 8 and 9 illustrate an overlapping state between the first tape 130 and the second tape 170 in a case where the pouch-type secondary battery 100 including the electrode assembly 110 to which the first tape 130 is attached is seated on the press device including the inserted paper to which the second tape 170 is attached. Hereinafter, redundant description as those above may not be repeated.

In a case where the pouch-type secondary battery 100 is seated on the inserted paper, and the lower boundary lines of the first tape 130 and the second tape 170 overlap with each other in a straight line, a stress of the first tape 130 and the second tape 170 may be concentrated. In this case, lithium may be linearly precipitated from the electrode plate during the heat and press process. In some embodiments, the position of the pouch-type secondary battery 100 may move due to the thickness of the overlapping tape when seated on the inserted paper.

In an embodiment, as illustrated in FIG. 8, the second tape 170 may cover the entire area of the first tape 130.

In more detail, as illustrated in FIG. 8, the first tape 130 may be attached to an area where the mixture portion of the positive electrode plate and the mixture portion of the negative electrode plate overlap with each other in the electrode assembly 110. Generally, the negative electrode plate may be wide enough to cover the positive electrode plate, so as to prevent precipitation of lithium in the battery, which is defined as an overhang. In a stack-type electrode assembly, an inclined area may be generated or a separator lifting phenomenon may be severe at the portion where the mixture portion of the positive electrode plate and the mixture portion of the negative electrode plate overlap with each other. On the other hand, in an area where the mixture portion of the positive electrode plate and the mixture portion of the negative electrode plate do not overlap with each other, for example, such as an overhang area, an inclined area may be relatively less generated, or a separator lifting phenomenon may occur relatively less.

In the portion where the mixture portion of the positive electrode plate and the mixture portion of the negative electrode plate overlap with each other, the first tape 130 may be attached to the inclined area of the electrode assembly (e.g., the inclined areas A and A' of FIG. 2). For example, the first tape 130 may be attached to a portion excluding an overhang length (c). In some embodiments, the first tape 130 may be attached to a portion including the overhang length (c).

In an embodiment, the second tape 170 may be attached to the inserted paper of the press device, so as to cover the lower boundary of the first tape 130 at the position where the tab film begins. For example, the second tape 170 may be attached to cover a length (a) between the end of the tab film and the end of the case 140, a length (b) between the end of the case 140 and the electrode assembly 110, the overhang length (c), and a length (d) of the first tape. In other words, a length (e) of the second tape 170 may be greater than the length (a) between the end of the tab film and the end of the case 140, the length (b) between the end of the case 140 and the electrode assembly 110, the overhang length (c), and the length (d) of the first tape 130. The second tape 170 may be attached to the positive electrode plate to be longer than the first tape 130 by a length (f) between the end of the first tape 130 and the end of the second tape 170.

As another example, in order to suppress a side reaction in the inclined area, the second tape 170 may be attached to cover at least the overhang length (c) and the length (d) of the first tape 130. As another example, the second tape 170 may be attached to cover at least the length (d) of the first tape 130.

In an embodiment, to avoid the lower boundaries of the first tape 130 and the second tape 170 from overlapping with each other in a straight line, the second tape 170 may be arranged so that the end of the second tape 170 is positioned on the upper side of the first tape 130, as illustrated in FIG. 9.

In an embodiment, the second tape 170 may be attached to the inserted paper of the press device, so as not to cover the lower boundary of the first tape 130 at the position where the tab film begins. For example, the second tape 170 may be attached to cover a portion of the length (b) between the end of the case 140 and the electrode assembly 110, the overhang length (c), and the length (d) of the first tape 130. In this case, the second tape 170 may be attached to the positive electrode plate to be shorter than the first tape 130 by the length (f) between the end of the first tape 130 and the end of the second tape 170.

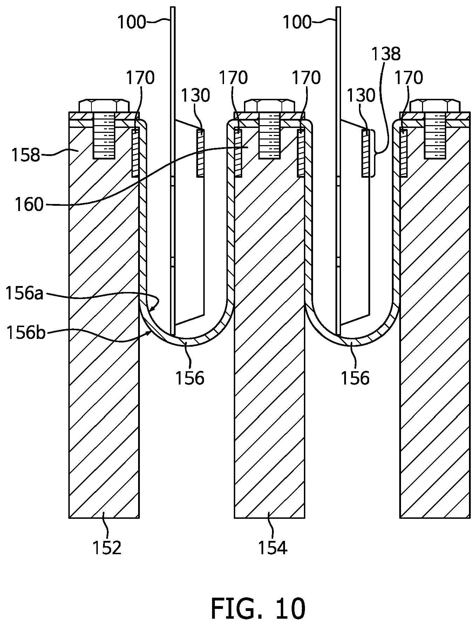

FIG. 10 illustrates a longitudinal cross-sectional view of the press device according to an embodiment of the present disclosure.

In an embodiment, the pouch-type secondary battery 100 may be seated on one side 156a of the inserted paper 156 of the press device, so that the lead tab is exposed to the outside of the inserted paper 156. In more detail, as illustrated in FIG. 10, the lead tab may be exposed in the upward direction of the inserted paper 156. As such, a pressurization of the lead tab and terminal portion may be prevented or substantially prevented.

In this case, the corner portion 138 and/or the inclined area (e.g., the inclined areas A and A' of FIG. 2) of the pouch-type secondary battery 100 may be arranged at a position close to the upper portions 158 and 160 of the plate, as illustrated in FIG. 10. Accordingly, the first tape 130 and the second tape 170 may be attached to the inserted paper 156 by adjusting the position, so that the corner portion 138 and/or the inclined area of the pouch-type secondary battery 100 are pressed by the first plate 152 and the second plate 154. Referring to FIG. 10, the second tape 170 is illustrated as being attached to the other side 156b opposite to the one side 156a of the inserted paper on which the pouch-type secondary battery 100 is seated, but the present disclosure is not limited thereto, and the second tape 170 may be attached to the one side 156a of the inserted paper.

The capacity of the secondary battery may decrease as the secondary battery continues to be charged and discharged. For example, the capacity may initially be 1,000 mAh, and may decrease to 700, 600, and 500 mAh after several hundred charge/discharge cycles. Generally, the life cycle is defined as the number of charge/discharge cycles until the capacity is reduced to 80% to 60% of the initial capacity. For example, in a case where the life cycle is 500 times, this may mean 500 times at 100% DOD, where DOD refers to depth of discharge.

In an embodiment, the pouch-type secondary battery manufactured through an HPC process by attaching the first tape and the second tape together may have improved side reactions at the corner portions of the electrode assembly where the electrode tabs are positioned even after 600 cycles. The pouch-type secondary battery manufactured through the HPC process by attaching the first and second tapes together may have an improved flatness in a flatness test using an HPC pressure sensitive paper.

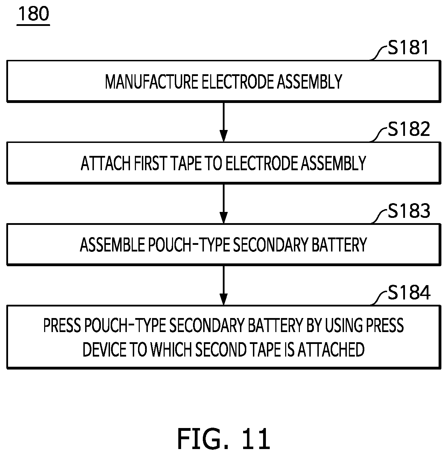

FIG. 11 illustrates a flowchart showing a method of manufacturing a pouch-type secondary battery according to an embodiment of the present disclosure.

A method 180 for manufacturing a pouch-type secondary battery according to an embodiment of the present disclosure may include manufacturing an electrode assembly S181, attaching a first tape to the electrode assembly (S182), assembling a pouch-type secondary battery (S183), and pressing the pouch-type secondary battery by using a press device to which the secondary battery is attached (S184). For example, the electrode assembly may be manufactured (S181) by stacking unit cells including a first electrode plate having a first electrode tab formed thereon, a second electrode plate having a second electrode tab formed thereon, and a separator interposed between the first electrode plate and the second electrode plate. The first tape may be attached to a front side of the electrode assembly perpendicular to or substantially perpendicular to a stacking direction (S182). The pouch-type secondary battery including the electrode assembly and the first tape may be assembled (S183), and the pouch-type secondary battery may be pressed by using the press device (S184).

In the assembling of the pouch-type secondary battery (S183) including the electrode assembly and the first tape, a case accommodating the electrode assembly and the first tape may be sealed to assemble the pouch-type secondary battery.

In the pressing of the pouch-type secondary battery (S184), the press device may include a first plate, a second plate opposite to the first plate, an inserted paper having opposite ends connected to an upper portion of the first plate and an upper portion of the second plate, respectively, and interposed between the first plate and the second plate, and a second tape attached to the inserted paper.

The second tape may be attached to the inserted paper of the press device to correspond to a corner portion of the pouch-type secondary battery where a lead tab of the pouch-type secondary battery is positioned.

However, the flowchart of FIG. 11 described above are provided as an example of an embodiment of the present disclosure, and the present disclosure is not limited thereto. For example, one or more processes may be added/changed/deleted, the order of one or more processes may be changed, and/or one or more processes may be performed concurrently or substantially simultaneously with each other.

Although the present disclosure has been described above with respect to embodiments thereof, the present disclosure is not limited thereto. Various modifications and variations can be made thereto by those skilled in the art within the scope of the present disclosure as defined by the appended claims.

### DESCRIPTION OF SOME REFERENCE SYMBOLS

100: pouch-type secondary battery
110: electrode assembly
112: unit cell
114: first electrode plate
114a: first electrode current collector plate
114b: first electrode mixture portion
116: first electrode tab
118: separator
120: second electrode plate
120a: second electrode current collector plate
120b: second electrode mixture portion
122: second electrode tab
124, 136: second lead tab
126, 134: first lead tab
128: enlarged view of inclined area
130, 132: first tape
138: corner portion
140: case
142: air pocket
w1: width
w2: width
A, A': inclined area
B: normal area
a: length between end of tab film and end of case
b: length between end of case and electrode assembly
c: overhang length
d: length of first tape
e: length of second tape
f: length between end of first tape and end of second tape
150: press device
152: first plate
154: second plate
156: inserted paper

## Claims

1. A pouch-type secondary battery (100) comprising:
an electrode assembly (110) comprising a stack of unit cells (112) comprising:
a first electrode plate (114);
a first electrode tab (116) on the first electrode plate (114);
a second electrode plate (120);
a second electrode tab (122) on the second electrode plate (120); and
a separator (118) between the first electrode plate (114) and the second electrode plate (120); and
a first tape (130, 132) attached to a front side of the electrode assembly (110) perpendicular to a stacking direction of the stack of unit cells (112),
wherein the first tape (130, 132) is located at a corner portion (138) of the electrode assembly (110) where the first electrode tab (116) or the second electrode tab (122) is located, and
wherein the corner portion (138) is located at an inclined area (128, A, A') where a thickness of the electrode assembly (110) decreases.

2. The pouch-type secondary battery (100) as claimed in claim 1, wherein the inclined area (128, A, A') is where a thickness of a first electrode mixture portion (114b) of the first electrode plate (114) or a second electrode mixture portion (120b) of the second electrode plate (120) is reduced.

3. The pouch-type secondary battery (100) as claimed in claim 2, wherein the thickness of the first electrode mixture portion (114b) of the first electrode plate (114) or the second electrode mixture portion (120b) of the second electrode plate (120) in the inclined area (128, A, A') is less than that of an area other than the inclined area (128, A, A').

4. The pouch-type secondary battery (100) as claimed in any one of the preceding claims, wherein the first tape (130, 132) is attached to the front side of the electrode assembly (110) and a back side opposite to the front side.

5. The pouch-type secondary battery (100) as claimed in any one of claims 1 to **4,** wherein the first electrode tab (116) comprises a stack of a first electrode tab group, a first lead tab (126) is connected to the first electrode tab group, the second electrode tab (122) comprises a stack of a second electrode tab group, and a second lead tab (124) is connected to the second electrode tab group, and
wherein the first lead tab (126) and the second lead tab (124) are located in a same direction of the electrode assembly (110) as each other.

6. The pouch-type secondary battery (100) as claimed in any one of claims 1 to **4,** wherein the first electrode tab (116) comprises a stack of a first electrode tab group, a first lead tab (134) is connected to the first electrode tab group, the second electrode tab (122) comprises a stack of a second electrode tab group, and a second lead tab (136) is connected to the second electrode tab group, and
wherein the first lead tab (134) and the second lead tab (136) are located in opposite directions of the electrode assembly (110) from each other.

7. A press device (150) of a pouch-type secondary battery (100), the press device (150) comprising:
a first plate (152), and a second plate (154) opposite to the first plate (152);
an inserted paper (156) having opposite ends connected to an upper portion (158) of the first plate (152) and an upper portion (160) of the second plate (154), respectively, and interposed between the first plate (152) and the second plate (154); and
a second tape (170) attached to the inserted paper (156),
wherein the second tape (170) is attached to a corner portion (138) of the pouch-type secondary battery (100) seated on the inserted paper (156), the corner portion (138) being where a lead tab (124, 126, 134, 136) of the pouch-type secondary battery (100) is located, and
wherein the corner portion (138) is located in an inclined area (128, A, A') where a thickness of an electrode assembly (110) decreases.

8. The press device (150) as claimed in claim 7, wherein the pouch-type secondary battery (100) comprises:
an electrode assembly (110) comprising a stack of unit cells (112) comprising:
a first electrode plate (114);
a first electrode tab (116) on the first electrode plate (114);
a second electrode plate (120);
a second electrode tab (122) on the second electrode plate (120); and
a separator (118) between the first electrode plate (114) and the second electrode plate (120); and
a first tape (130, 132) attached to a front side of the electrode assembly (110) perpendicular to a stacking direction of the stack of unit cells (112), and
wherein the first tape (130, 132) is located at the corner portion (138) of the electrode assembly (110) where the first electrode tab (116) or the second electrode tab (122) is located.

9. The press device (150) as claimed in claim 8, wherein the inclined area (128, A, A') is where a thickness of a first electrode mixture portion (114b) of the first electrode plate (114) or a second electrode mixture portion (120b) of the second electrode plate (120) is reduced.

10. The press device (150) as claimed in claim 9, wherein the thickness of the first electrode mixture portion (114b) of the first electrode plate (114) or the second electrode mixture portion (120b) of the second electrode plate (120) in the inclined area (128, A, A') is less than that of an area other than the inclined area (128, A, A').

11. The press device (150) as claimed in any one of claims 7 to 10, wherein the second tape (170) covers an entire area of the first tape (130, 132).

12. The press device (150) as claimed in any one of claims 7 to 11, wherein an end of the second tape (170) is located on an upper side of the first tape (130, 132).

13. The press device (150) as claimed in any one of claims 7 to 12, wherein the lead tab (124, 126, 134, 136) is exposed outside of the inserted paper (156) on which the pouch-type secondary battery (100) is seated.

14. The press device (150) as claimed in any one of claims 7 to 13, wherein the lead tab (124, 126, 134, 136) is exposed in an upward direction of the inserted paper (156).

15. A method (180) for manufacturing a pouch-type secondary battery (100), the method (180) comprising:
manufacturing (S181) an electrode assembly (110) by stacking unit cells (112) comprising:
a first electrode plate (114);
a first electrode tab (116) on the first electrode plate (114);
a second electrode plate (120);
a second electrode tab (122) on the second electrode plate (120); and
a separator (118) between the first electrode plate (114) and the second electrode plate (120);
attaching (S182) a first tape (130, 132) to a front side of the electrode assembly (110) perpendicular to a stacking direction of the unit cells (112);
assembling (S183) the pouch-type secondary battery (100) comprising the electrode assembly (110) and the first tape (130, 132); and
pressing (S184) the pouch-type secondary battery (100) by using a press device (150),
wherein the press device (150) comprises:
a first plate (152), and a second plate (154) opposite to the first plate (152);
an inserted paper (156) having opposite ends connected to an upper portion (158) of the first plate (152) and an upper portion (160) of the second plate (154), respectively, and interposed between the first plate (152) and the second plate (154); and
a second tape (170) attached to the inserted paper (156),
wherein the first tape (130, 132) is located at a corner portion (138) of the electrode assembly (110) where the first electrode tab (116) or the second electrode tab (122) is located,
wherein the corner portion (138) is located in an inclined area (128, A, A') where a thickness of the electrode assembly (110) decreases, and
wherein the second tape (170) is attached to a position corresponding to the first tape (130, 132).
